# EUROPEAN PATENT APPLICATION

(11) **EP 2 883 453 A1**
(43) Date of publication of application: **17.06.2015**
(21) Application number: 13382500.0
(22) Date of filing: 10.12.2013
(51) Int. Cl.: A01N 25/08, A01N 25/10, A01N 25/04, A01N 25/34, A01N 59/16, A01N 43/40, A01P 1/00, C04B 41/81, C09D 5/14

(54) **Ceramic product with controlled release of a compound with biocidal activity**

(71) Applicant: Keraben Grupo, S.A., 12520 Nules (Castellon) (ES); Asociación De Investigación De Las Industrias Cerámicas (AICE), 12006 Castellón (ES); Universitat Jaume I de Castello, 12006 Castellon de la Plana (ES); Nederlandse Organisatie voor toegepast- natuurwetenschappelijk onderzoek TNO, 2595 DA 's-Gravenhage (NL); Janssen Pharmaceutica NV, 2340 Beerse (BE)
(72) Inventor: Guaita Delgado, Vicente Luis, 12520 NULES (CASTELLON) (ES); Bemgoechea Escribano, Miguel Angel, 12520 NULES (CASTELLON) (ES); Gras Llopis, Matías Alberto, 12520 NULES (CASTELLON) (ES); Sanz Solana, Vicente, 12006 CASTELLON DE LA PLANA (ES); Noguera Orti, Juan Francisco, 12006 CASTELLON DE LA PLANA (ES); Erich, Sebastiaan Joannes Franciscus, 2628 VK DELFT (NL); De Bolle, Miguel F.C., B-2340 BEERSE (BE)
(74) Representative: Temino Ceniceros, Ignacio

(57) **Abstract**

The present invention refers to the procedure and compositions used in the manufacture of a ceramic product having controlled release of a compound with biocidal activity.

## Description

### Field of the art

The present invention falls within the technical field of the manufacture of ceramic products. More specifically, the present invention refers to the procedure and compositions used in the manufacture of a ceramic product having controlled release of a compound with biocidal activity.

### State of the art

Although the surface of the ceramic tiles is usually bacteriostatic, the walls or floors that are coated with these may have biological problems of different nature originating from joints or coated materials. There are grouting materials that incorporate biocides, however, the only way to ensure the biocidal behavior of ceramic coatings is the incorporation of the biocidal material directly in the ceramic tile.

The ceramic tiles installed may be affected by the growth of fungi, algae and other microorganisms in a few months. Those surfaces that are in dark and damp places are especially sensitive to the condition by microorganisms that, in addition to creating unhealthy environments, cause a green or black coloration damaging its esthetic value and affecting adversely the durability of the constructive element considered.

A problematic area with high risk wherein the growth of microorganisms is usually produced are the bathrooms and kitchens, which can cause different types of health problems, such as for example infections or contamination by fungi. The range of temperature and humidity in which typically these places are also favors the growth of microorganisms.

Hospitals also may be affected by the growth of fungi and other microorganisms, thus the European Centre for Disease Prevention and Control has estimated that in the countries members of the European Union 1 out of 18 patients are annually affected by infections contracted in hospitals themselves (Point prevalence survey of healthcare-associated infections and antimicrobial use in European acute care hospitals 2011-2012 http://ecdc.europa.eu/en/publications/Publications/healthcare-associated-infections-antimicrobial-use-PPS.pdf). The use of ceramic tiles with biocidal capacity could prevent the infection of patients with pathogenic microorganisms.

Traditionally, the action of antimicrobial agents in materials is based on a principle of passive and uncontrolled release such as the molecular dispersion of the active ingredients in the matrix of the material. As a result, these antimicrobial agents have a high and inherent mobility in the matrix, which causes an initial boost of the biocidal activity and a marked decrease as time passes.

Recent research has shown the possibility of combining organic substances with biocidal activity to lamellar inorganic materials (F. Ohashi et al., Applied Clay Science, 46, 2009, 296-299; M. Boufatit et al., Desalination, 223, 2008, 366-374).

The patent EP 0513409 B1 describes the use of microbiocidal agents for treating roof tiles, but the release is not controlled by environmental conditions or for the presence of microorganisms.

In the application field of the ceramic tiles, compositions having biocidal activity have been previously described. Thus for example the patent application ES 2 406 354 A1 describes a composition for a bactericidal ceramic enamel which uses zinc oxide as biocidal agent. However, its effect does not reach to the joints between tiles.

The patent applications WO 2012/148268 and WO 2009/072888 deal about systems that allow the extended release of metal complexes with biocidal activity. In these patents, an inorganic compound (clay) is used, which has been treated with an organic modifier, to prolong the release of a metallic pyrithione. Patents focus their implementation in building materials (cement, plaster, paint, glue, plastic, wood,...) but do not mention at any time its implementation in ceramic tiles.

With regard to the precedents about systems that allow the controlled release of antimicrobial compounds in the presence of certain enzymes or microorganisms, the patents WO 2004/105485 A2 and WO 2009/035331 A1 about "inducible release vehicles", both applied by NTO, should be mentioned. These patents focus their implementation in the pharmaceutical, food (food packages and flavor release), and cosmetics industry, fields of application very different of those of the ceramic tiles. In both patents, a biopolymer derived from a carbohydrate or protein is used to achieve that the release of an active compound is activated in the presence of certain microorganisms.

### Description of the invention

The present invention provides solution to the above problems since that it is related to compositions for coating ceramic products with antimicrobial activity. Therefore, in a first aspect, the present invention is related to a coating composition of ceramic products (hereinafter composition of the present invention) comprising: a biocide, liquid medium, dispersing agent, and binder. In the present invention by coating is related to the action of depositing and spreading something, in this case the composition of the present invention so that it totally or partially covers a surface.

In a particular embodiment, the biocide is incorporated into a controlled release system. In another embodiment, the controlled release system of the biocide is selected from a slow release system or an induced release system.

In a more particular embodiment, the controlled release system comprises a lamellar inorganic material.

In a particular embodiment, the lamellar inorganic material has negative or positive charge. Examples of suitable negatively charged lamellar inorganic materials are clays such as smectite, motmorillonite, kaolinite, vermiculite, bentonite, saponite and hectorite. Examples of suitable positively charged lamellar inorganic materials are lamellar double hydroxides.

In an embodiment of the invention, the extended-release system consists of a lamellar inorganic material that can be modified by the addition of one or more organic compounds. In order to improve the affinity of lamellar inorganic materials to zinc pyrithione, these can be modified. It is possible to replace the counter-ions present between the layers of the lamellar inorganic material by charged organic compounds and therefore change their hydrophobicity, affecting in a greater affinity of this compound to the zinc pyrithione. Lamellar clays that have been modified with ionic organic compounds are known as organoclays.

These organoclays can be prepared from the two starting reagents (clays and charged organic compounds), or be purchased commercially from suppliers such as Rockwood or IBZ-Freiberg. Well-known brands are Nanofil and Cloisite.

An advantage of the present invention, in case of organoclays are used, is that the release of zinc pyrithione in the ceramic product increases in humid environments. Such environments are usually the cause of the development of microbes in the ceramic product and therefore an increase in the amount of released biocide induced by an increase in moisture is effective in reducing or preventing this bacterial activity.

In a more particular embodiment, the controlled release system comprises a biopolymer that is selected from the following group: starch or starch derivatives, cellulose or cellulose derivatives, pectin and pectin derivatives, gelatin and gelatin derivatives. The biopolymer can be modified by oxidation, substitution with functional cationic groups, with carboxymethyl groups or by esterification with for example acetyl groups. Cross-linking agents such as divinyl sulfone, epichlorohydrin, diepoxides, butanediol, diglycyl ether, sodium trimetaphosphate and atypical acid or derivatives can also be used. The polymer can also be cross-linked by enzymes such as peroxydases, laccases, polyphenol oxidases, transglutaminases, disulfide isomerases, sulphydryl oxidases, lysyl oxidases and lipogenases.

An advantage of the present invention, in the event of a biopolymer is used to encapsulate the biocide, is that the release of the same is regulated by the degradation of the polymer that is part of its encapsulation. Provided the protective layer that forms the polymer is intact, the biocide remains inside and is not released. When microorganisms start to grow excrete specific enzymes that degrade the biopolymer, causing the release of biocidal agent. Another advantage of the present invention, in the event of a biopolymer is used to encapsulate the active substance, is that the biocide is only released in those areas where certain microorganisms are present. Therefore, in the absence of microorganisms, no release of zinc pyrithione exists in the ceramic product, and in the presence of microorganisms to be controlled, the amount of biocidal substance released will be as minimal as possible, thus prolonging their useful life.

Many ceramic products are porous, so such porosity could be used as a biocide reservoir; however, the relationship of sizes between the pores of the ceramic product and biocidal particles prevents their penetration.

In particular, another embodiment of the present invention is related to the incorporation of the biocide to the ceramic product by transchelation.

By transchelation, the present invention is related to the formation of the biocidal complex directly in the controlled release system.

In a particular embodiment, the biocide of the composition of the present invention is selected from any commercially available, such as for example: IPBC (3-iodo-2-propynyl butylcarbamate), DIURON (3-(3,4-dichlorophenyl)-1,1-dimethylurea), OIT (2-octyl-2H-isothiazol-3-one), DCOIT (4,5-dichloro-2-octyl-2H-thiazol-3-one), CARBENDAZIM (methyl benzimidazol-2-yl carbamate), TERBUTRYN (2-tert-butylamino-4-ethylamino-6-methylthio-1,3,5-triazine), THIABENDAZOLE (2-(4-thiazolyl) benzimidazole), IMAZALIL (1-[2-(allyoxy)-2-(2,4-dichlorophenyl)ethyl]-1H-imidazole), and PROPICONAZOLE (1-[[2-(2,4-dichlorophenyl)-4-propyl-1,3-dioxolan-2-yl]methyl]-1H-1,2,4-triazole).

In another particular embodiment, the biocide is zinc (bis-(1-hydroxy-2-1H-pyridine thionate-O,S), also known as ZINC PYRITHIONE.

In another particular embodiment, the biocide of the present invention is in a percentage between 0.1-20% by weight to the total weight of the suspension, preferably between 0.1 and 5% by weight to the total weight of the composition.

In another particular embodiment, the liquid medium of the composition of the present invention is selected from water, alcohol, glycol, or a mixture thereof.

In another particular embodiment, the dispersing agent of the composition of the present invention, is selected from fatty acids, polyacrylates, polymers, surfactants, or mixtures thereof.

In another particular embodiment, the dispersing agent is in a percentage between 0.1-20% by weight to the total weight of the composition, preferably between 0.1 and 5% by weight to the total weight of the composition.

In another particular embodiment, the binder of the composition of the present invention is a sodium carboxymethyl cellulose.

In another particular embodiment, the binder is in a percentage between 0.1-20% by weight to the total weight of the composition, preferably between 0.1 and 5% by weight to the total weight of the composition.

In another aspect, the present invention is related to a ceramic product (hereinafter ceramic product of the present invention) that is coated on, at least one of its surfaces, totally or partially, with the coating composition of the present invention. Preferably the ceramic product of the present invention is coated on the rear surface and on the sides. In an embodiment, in particular, the ceramic product is totally coated on the rear surface. In another embodiment, in particular the ceramic product is only coated on a specific area of the rear surface and/or on the sides.

In the present invention by ceramic product is related to any kind of ceramic product for flooring or tiling the walls.

In another aspect, the present invention is related to the use of the composition of the present invention to inhibit the growth of microorganisms in the layout joints of ceramic products.

### Examples

### Example 1

Following the instructions described in the patent application WO 2009/072888 an organoclay suspension was prepared (20% by weight to the total weight of the suspension) from a bentonite and phenyl trimethyl ammonium bromide (10% molar excess) using as solvent deionized water. The suspension was dried by drying with an infrared lamp.

Subsequently an aqueous suspension was prepared by mixing deionized water with the organoclay (3,84% by weight to the total weight of the suspension), sodium carboxymethyl cellulose with a purity of 99,5% (2% by weight to the total weight of the suspension) and zinc pyrithione (1 % by weight to the total weight of the suspension).

A coating of this solution was applied in the back and edges of the ceramic tiles using a roller.

The ceramic tiles treated according to Example 1 previously provided, were tested to assess its antifungal efficacy. Three representative microorganisms are used to carry out the test: *Alternaria alternata, Cladosporium cladosporioides* and *Aspergillus versicolor,* all of them belonging to the kingdom of fungi.

To reproduce the real conditions of use of the ceramic tiles, panels were prepared with them. Each panel contained 9 ceramic tiles and in the preparation adhesives and grouts were used for filling the joints of the tiles in order to simulate real conditions. The rear and side part of the panels were sealed with silicone.

In total 6 panels were prepared to which the following nomenclature was assigned:
ZnPT (PTA): 2 panels with the ceramic tiles treated from Example 1,
1% ZnPT: 2 panels only treated with a suspension of zinc pyrithione (1% by weight) and carboxymethyl cellulose (2% by weight),
Target: 2 panels without any anti-microbial treatment.

These panels were inoculated with spores of fungi that had previously been added to a preheated agar gel. The tests were carried out with the tiles in a vertical position in order to simulate real specific conditions (tiles in a bathroom), in a climatic chamber (temperature: 25°C, relative humidity: 96%). As an important aspect of the bioassays is the irrigation of the specimens, the panels were irrigated over a period of time of 3 weeks for 10 minutes every 4 hours with cold tap water.

The growth of fungi was recorded in each of the joints of the panels, since this is the place more susceptible to the fungal attack. The assessment system of the biocidal activity is as follows:
0: there is no growth, the tile is resistant to the fungal attack.
1: initial fungal growth, the tile is partially protected against fungal attack.
2: obvious fungal growth along with sporulation, the tile is susceptible to the fungal attack.

The obtained results can be seen in the table 1.

**Table 1. Biocidal efficiency of the ceramic tiles using the method described in example 2.**

| Time | Composition | | |
|---|---|---|---|
| | Target | 1% ZnPt | 1% ZnPt (PTA) |
| 2 weeks | 2 | 0.375 | 0.25 |
| 3 weeks | 2 | 1.5 | 0.375 |

The results confirm that the zinc pyrithione exerts biocidal activity on the joints of the panels, the most favorable place for its growth. In addition the results show that compositions containing organoclays of the present invention are useful with regard to the controlled release of zinc pyrithione as is clear from the values of biocidal activity obtained after two or three weeks which are superior to those of the compositions Target and 1 % ZnPt.

## Claims

1. Coating composition of ceramic products comprising:
- a biocide;
- a liquid medium;
- a dispersing agent;
- a binder.

2. Coating composition according to claim 1, **characterized in that** the biocide is incorporated into a controlled release system.

3. Composition according to claim 2, **characterized in that** the controlled release system of biocide is selected from a slow release system or an induced release system.

4. Composition according to claim 3, **characterized in that** the controlled release system is a nanoclay or a biopolymer.

5. Composition according to any of the preceding claims, **characterized in that** the biocide is selected from IPBC, Diuron, OIT, DCOIT, Carbendazim, Terbutryn, Thiabendazole, zinc Pyrithione, Imazalil, Propiconazole or other biocides.

6. Composition according to claim 5, **characterized in that** the biocide is Zinc Pyrithione.

7. Composition according to any of the preceding claims, **characterized in that** the biocide is in a percentage between 0.1-20% by weight to the total weight of the suspension.

8. Composition according to any of the preceding claims, **characterized in that** the liquid medium is selected from water, alcohol, glycol, or a mixture thereof.

9. Composition according to any of the preceding claims, **characterized in that** the dispersing agent is selected from fatty acids, polyacrylates, polymers, surfactants, or mixtures thereof.

10. Composition according to claim 9, where the dispersing agent is in a percentage between 0.1-20% by weight to the total weight of the suspension.

11. Composition according to any of the preceding claims, where the binder is a sodium carboxymethyl cellulose.

12. Composition according to claim 11, where the binder is in a percentage between 0.1-20% by weight to the total weight of the suspension.

13. Ceramic product **characterized in that** it is coated on at least one of its surfaces coating it totally or partially with the coating composition according to claims 1-12.

14. Ceramic product according to claim 13, **characterized in that** it is coated on the rear surface and on the sides.

15. Use of the coating composition according to any of claims 1-12 to avoid the growth of microorganisms in the layout joints of ceramic products.
